# EUROPÄISCHE PATENTSCHRIFT

(11) **EP 1 576 305 B1**
(45) Veröffentlichungstag und Bekanntmachung des Hinweises auf die Patenterteilung: **14.05.2014**
(21) Anmeldenummer: 03813068.8
(22) Anmeldetag: 20.06.2003
(51) Int. Cl.: F16H 35/02, G05G 7/04, F02B 37/22

(54) **VORRICHTUNG ZUM BETÄTIGEN VON VERSTELLKOMPONENTEN IM KRAFTFAHRZEUG**
DEVICE FOR OPERATING ADJUSTMENT COMPONENTS IN A MOTOR VEHICLE
DISPOSITIF POUR ACTIONNER DES ELEMENTS REGLABLES DANS UN VEHICULE AUTOMOBILE

(30) Priorität: 17.12.2002 DE 10258848
(43) Veröffentlichungstag der Anmeldung: 21.09.2005
(73) Patentinhaber: ROBERT BOSCH GMBH, 70442 Stuttgart (DE)
(72) Erfinder: DREWE, Ingo, 77815 Buehl (DE); LANDAU, Oliver, 44866 Bochum (DE)
(86) Internationale Anmeldenummer: PCT/DE2003/002060
(87) Internationale Veröffentlichungsnummer: WO 2004/055417

(56) Entgegenhaltungen:
- EP-A- 0 683 852
- DE-A- 2 356 306
- DE-C- 508 842
- US-A- 5 199 393
- PATENT ABSTRACTS OF JAPAN vol. 009, no. 025 (M-355), 2. Februar 1985 (1985-02-02) & JP 59 170557 A (ISHIKAWAJIMA HARIMA JUKOGYO KK;OTHERS: 01), 26. September 1984 (1984-09-26)

## Beschreibung

### Stand der Technik

Die Erfindung betrifft einen Abgas-Turbolader mit einer variablen Turbinen-Geometrie, nach dem unabhängigen Anspruch. Stellmotoren, die üblicherweise als Kupplungs- oder Getriebesteller eingesetzt werden, umfassen einen Gleichstrom-Elektromotor, auf dessen Ankerwelle eine Schnecke angeformt ist, welche mit einem Schneckenrad kämmt. Dabei können auch weitere Getriebestufen vorgesehen sein, wobei mittels des Gleichstrom-Elektromotors entweder eine Linear- oder Rotationsbewegung erzeugt wird. Solche Stellmotoren werden beispielsweise auch an Anbaukomponenten von Verbrennungskraftmaschinen wie z. B. einem Abgas-Turbolader eingesetzt. Hierbei treibt ein Turbinenlaufrad ein Verdichterlaufrad an, mit welchem eine bessere Füllung der Zylinder einer Verbrennungskraftmaschine erreicht werden kann.

Mit der EP 0 683 852 B1 ist ein Abgas-Turbolader für Brennkraftmaschinen bekannt geworden, der eine mit Lagermitteln in einem Gehäuse angebrachte Antriebswelle umfasst, die ein abgasgetriebenes Turbinenlaufrad mit dem Laufrad eines Verdichters antriebsmäßig verbindet. Es ist ferner eine Gasstrom-Steuervorrichtung vorgesehen, die stromaufwärts vom Turbinenlaufrad positioniert ist und zur Einstellung der Betriebsleistung des Abgas-Turboladers dient. Ferner ist ein elektrisch antreibbarer Stellmotor zur Regulierung des Betriebs der Gasstrom-Steuervorrichtung über ein Gestänge als Reaktion auf ein elektrisches Signal vorgesehen, das zumindest vom Austrittsdruck des Verdichters abhängt. Dabei wird die Gasstrom-Steuereinrichtung mittels des Stellmotors geradlinig parallel zum Abgasrohr bewegt, wodurch der Gasdurchfluß geregelt wird. Hierbei muss der Stellantrieb so groß dimensioniert werden, dass die Leitschaufeln bis zu ihrer geschlossenen Stellung im Bereich sehr hoher Stellkräfte bzw. Stellmomente noch bewegt werden können. Eine solche Auslegung des Motors für eine hohe maximale Leistungsaufnahme, die nur für einen kleinen Verstellbereich benötigt wird, ist mit entsprechenden Kosten und Bauraum verbunden.

Mit der JP 59170557 A ist ein Zahnradgetriebe bekannt geworden, das eine kontinuierlich veränderliche Winkelgeschwindigkeit an der Abtriebswelle zur Verfügung stellt. Hierzu sind das Abtriebsrad und das Antriebsrad jeweils exzentrisch drehbar auf einer Welle gelagert.

### Vorteile der Erfindung

Der erfindungsgemäße Turbolader, mit den Merkmalen des Anspruchs 1 hat den Vorteil, dass aufgrund des mit dem Drehwinkel veränderlichen Übersetzungsverhältnis des Getriebes zwischen dem Stellmotor und den Verstellkomponenten in einfacher Weise ein veränderliches Verstellmoment zur Verfügung gestellt wird, um beispielsweise bewegliche Teile eines Turboladers zu betätigen. Durch die Anpassung des aufzubringenden Verstellmoments an den veränderlichen Kraftbedarf über dem Verstellweg oder den Verstellwinkel kann der Stellmotor klein und kompakt ausgelegt werden, bzw. wird die Verstellkomponente auch in ihren Endlagen bei erhöhtem Kraftbedarf zuverlässig verstellt. Außerdem kann die Bewegung der Verstellkomponente sehr schnell und exakt geregelt werden.

In dem Getriebe ist ein zusammenwirkendes Zahnradpaar derart angeordnet, dass beide Zahnräder exzentrisch gelagert sind. Dadurch wird auf sehr engem Bauraum ein Getriebe mit variablem Übersetzungsverhältnis realisiert. Eine solche Anordnung ist mechanisch sehr robust, da ein solches Getriebe wenig Spiel aufweist und eine lange Lebensdauer besitzt. Die Form der Verzahnung der beiden Zahnräder kann dabei sehr günstig den gewünschten Übersetzungsverhältnisse angepasst werden.In einer alternativen Ausführungsform können anstelle der exzentrisch gelagerten Zahnräder auch exzentrische Räder oder Räder mit Ellipsenform verwendet werden, die derart gelagert sind, dass sie kraft- oder formschlüssig miteinander zusammen wirken. Dabei kann durch die Form der Exzenter-/Ellipsenräder die Änderung des Übersetzungsverhältnis frei gestaltet werden.

Um die Variation des Übersetzungsverhältnis des Getriebes zu verstärken, sind in einfacher Weise direkt oder indirekt mit den Rädern wirkverbunden federelastische Elemente befestigt, die in Abhängigkeit vom Drehwinkel potenzielle Energie speichern oder freigeben. Dadurch kann beispielsweise auch erreicht werden, dass die Verstellkomponente bei Stromausfall des Stellmotors selbsttätig eine bestimmte Vorzugsstellung einnimmt. Eine sehr kompakte Anordnung der Vorrichtung ergibt sich durch die Integration des Getriebes in das Gehäuse des Stellmotors. Die erfindungsgemäße Vorrichtung verstellt eine variable Turbinengeometrie eines Turboladers, da hierbei ein drehbar angeordneter Leitschaufelring, mit dem in die Turbinengeometrie eingegriffen werden kann, über das Getriebe mit veränderlichem Übersetzungsverhältnis verstellt werden kann. Dabei ist der Drehwinkel des Abtriebselements des Getriebes mit dem Verstellwinkel des Leitschaufelrings korreliert, so dass die Geometrie bzw. die Exzentrizität des Getriebes ideal an das aufzuwendende Drehmoment des Leitschaufelrings angepasst werden kann.

Durch die in den Unteransprüchen angegebenen Maßnahmen sind vorteilhafte Weiterbildungen der Vorrichtung nach dem Anspruch 1 möglich. Ist die Exzentrizität der beiden Räder in etwa gleich groß, so ist dadurch ein ausreichender Zahneingriff der Verzahnung über den gesamten Drehwinkel gewährleistet.

Ein kompakter Aufbau des Getriebes ergibt sich, wenn die Abtriebswelle des Stellmotors das erste exzentrische Zahnrad über ein Antriebsritzel antreibt und das zweite exzentrische Zahnrad ein mit diesem fest verbundenes Abtriebselement aufweist. Durch ein solches Getriebe kann die kinematische Strecke zwischen Stellmotor und der Verstellkomponente sehr kurz gestaltet werden, so dass das Getriebe platzsparend im Gehäuse des Stellmotors integriert werden kann.

Weist der Stellmotor beispielsweise ein Schneckengetriebe auf, wirkt das Schneckenrad gleichzeitig als Antriebsritzel für das erste Getrieberad, die beide auf einer gemeinsamen Achse gelagert sind. Im Gehäuse des Stellmotors ist dabei eine zweite Achse mit dem zweiten Zahnrad und einem Abtriebselement angeordnet. Zusätzlich kann auf einer der beiden Achsen ein weiteres Getrieberad drehbar gelagert werden, das mit dem Abtriebselement des zweiten Zahnrads kämmt und ein weiteres Abtriebselement zur Betätigung der Verstellkomponente aufweist. Dadurch ist das Gehäuse einer solch erfindungsgemäßen Vorrichtung mit einer zusätzlichen Getriebestufe unwesentlich größer als das Getriebegehäuse eines gewöhnlichen Stellantriebs.

Besonders günstig ist es, dieses Getriebe zum Betätigen von Verstellkomponenten zu verwenden, die drehbar gelagert sind. Hierbei kann zwischen dem Abtriebselement des zweiten exzentrischen Zahnrads und der Verstellkomponente eine sehr einfache direkte mechanische Verbindung verwendet werden, wodurch der Verstellwinkel der Verstellkomponente direkt auf den Drehwinkel des Abtriebselements übertragen werden kann.

Vorteilhaft ist die Verwendung der Vorrichtung für Verstellkomponenten, deren Verstellkraft über dem Verstellweg zunimmt, da dann durch geeignete Wahl des veränderlichen Übersetzungsverhältnis der Kraftbedarf des Stellmotors in den Bereichen erhöhter Verstellkraft reduziert werden kann. Somit kann ein Stellmotor mit geringerer maximaler Leistung verwendet werden, wodurch Kosten und Bauraum gespart werden.

In einer Variation weist ein Turbolader eine Turbine mit variablen Turbinenschaufeln auf, die unter steigendem Kraftaufwand linear in eine Endposition maximaler Kompression verstellt werden können. Dabei kann das veränderliche Übersetzungsverhältnis des Getriebes in einfacher Weise mittels Kraftübertragungselementen in eine Linearbewegung mit veränderlicher aufzubringender Verstellkraft übersetzt werden.

### Zeichnung

In der Zeichnung sind Ausführungsbeispiele einer erfindungsgemäßen Vorrichtung dargestellt und in der nachfolgenden Beschreibung näher erläutert.

Es zeigen:
Figuren 1a bis 1d ein erfindungsgemäßes, exzentrisch gelagertes Zahnradpaar, mit winkelabhängig veränderlichem Übersetzungsverhältnis,
Figur 2 eine Darstellung des Momentan-Übersetzungsverhältnisses und des Antriebswinkels über dem Abtriebswinkel entsprechend dem Ausführungsbeispiel von Figur 1,
Figur 3 als weiteres Ausführungsbeispiel eines in einen Verstellantrieb integrierten Getriebes mit veränderlichem Übersetzungsverhältnis,
Figur 4 ein weiteres Getriebe mit veränderlicher Übersetzung mit einer zusätzlichen Getriebestufe,
Figur 5 eine erfindungsgemäße Vorrichtung zum Betätigen von Verstellkomponenten eines Abgas-Turboladers und
Figur 6 ein weiteres Ausführungsbeispiel eines erfindungsgemäßen Turboladers im Schnitt.

### Beschreibung

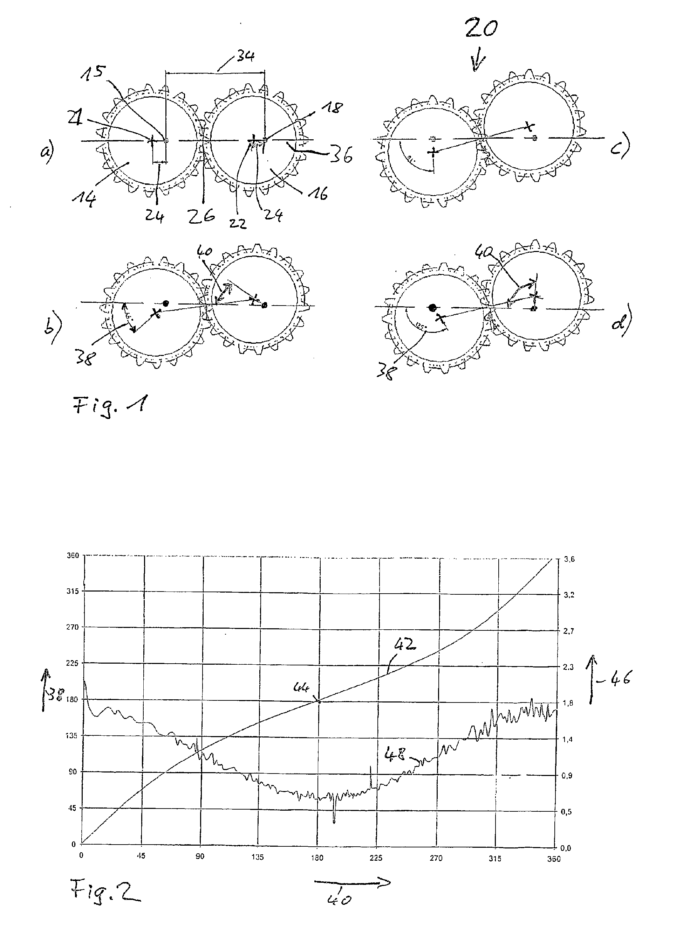

Figur 1a bis 1d zeigt als Bestandteil einer Betätigungsvorrichtung 10 von Verstellkomponenten 50 ein Getriebe 20 mit einem veränderlichen Drehmoment-Übersetzungsverhältnis. Ein erstes Zahnrad 14 ist dabei exzentrisch in einem Drehpunkt 15 gelagert und kämmt mit einem zweiten Zahnrad 16, das ebenfalls exzentrisch in einem zweiten Drehpunkt 18 gelagert ist. Die beiden Zahnräder 14 und 16 weisen einen kreisförmigen Querschnitt mit Mittelpunkten 21 und 22 auf, die hier jeweils denselben Abstand 24 zu den Drehpunkten 15 und 18 haben. Dieser Abstand 24 entspricht der Exzentrizität 24, mit der die beiden Zahnräder 14, 16 bei gegenseitigem Zahneingriff 26 rotieren. Das erste Zahnrad 14 wird dabei über ein nicht näher dargestelltes Antriebselement 28 von einem Stellmotor 30 angetrieben, am Zahnrad 16 ist ein nicht dargestelltes Abtriebselement 32 angeordnet, das das veränderliche Drehmoment auf die Verstellkomponenten 50 eines Kraftfahrzeugs überträgt. Der Antrieb und der Abtrieb ist hierbei jedoch auch austauschbar. Die beiden Drehpunkte 15 und 18 weisen einen Abstand 34 auf, der über die gesamte Drehung der Zahnräder 14 und 16 konstant bleibt. In Figur 1a liegen die beiden Drehpunkte 15 und 18 mit den beiden Mittelpunkten 21 bis 22 auf einer Geraden 36, welche beispielsweise ein Antriebswinkel 38 des Zahnrads 14 und ein Abtriebswinkel 40 des Zahnrads 16 von jeweils 0° definiert. Die Figuren 1b bis 1d zeigen nun die zeitliche Abfolge, wenn das Zahnrad 14 angetrieben wird. Der Abtriebswinkel 40 des Zahnrads 16 ändert sich dabei nicht proportional zum Antriebswinkel 38 des Zahnrads 14, da aufgrund der exzentrischen Lagerung der beiden Zahnräder 14, 16 sich das Übersetzungsverhältnis mit dem Antriebswinkel 38 ändert. Beispielsweise weist der Abtriebswinkel 40 des Zahnrads 16 in Figur 1d nach einer Drehung des Zahnrads 14 um den Antriebswinkel 38 von etwa 125° einen Betrag von gut 90° auf.

In Figur 2 ist der gemessene Verlauf des Antriebswinkels 38 über dem Abtriebswinkel 40 über eine gesamte Umdrehung der beiden Zahnräder 14, 16 nach Figur 1 dargestellt. Der Kurvenverlauf 42 des Antriebswinkels 38 ist punktsymmetrisch zum Punkt 44, nach einer Umdrehung der beiden Zahnräder 14, 16 um 180°. Aus der unterschiedlichen Änderung des Antriebswinkels 38 und dem Abtriebswinkel 40 ergibt sich eine daraus resultierende veränderliche Momentanübersetzung 46 deren Verlauf 48 über den Abtriebswinkel 40 aufgrund der experimentellen Daten Fluktuationen aufweist. Im dargestellten Beispiel der Figur 2 variiert das Übersetzungsverhältnis 46 beispielsweise zwischen etwa 0,6 und 1,7, was einem Maximal-Minimal-Verhältnis Der Übersetzungsänderung von etwa 3 entspricht.

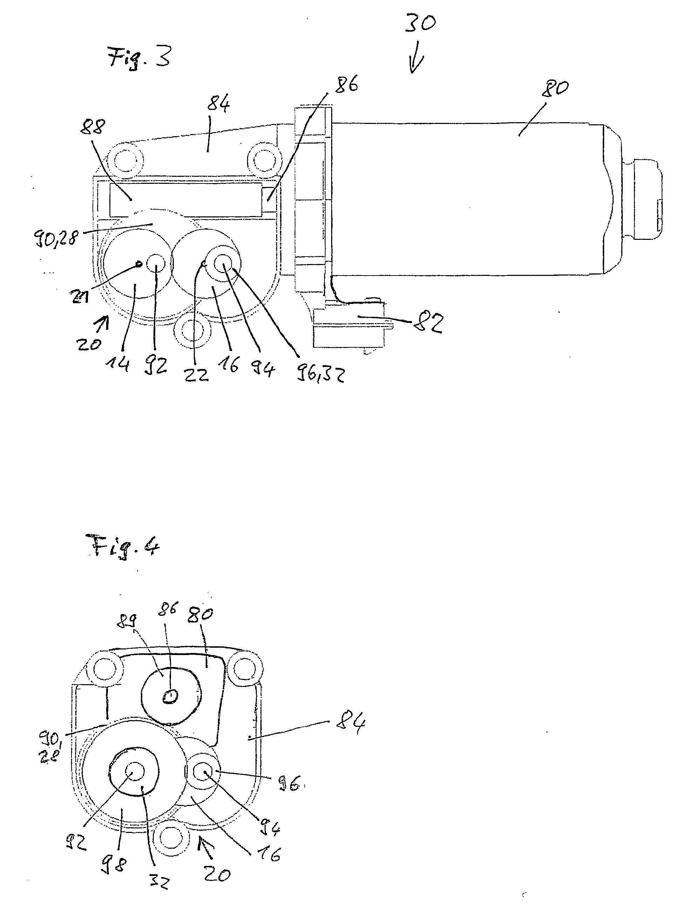

Figur 3 zeigt einen Verstellantrieb 30 mit einem Polgehäuse 80, einem Bürstenhalter 82 und einem Getriebegehäuse 84. Der Stellmotor 30 weist eine Ankerwelle 86 auf, auf der eine Schnecke 88 angeordnet ist, die mit einem Schneckenrad 90 kämmt. Das Schneckenrad 90 ist in diesem Ausführungsbeispiel als Antriebsrad 28 ausgebildet, und ist drehfest mit dem ersten Zahnrad 14 verbunden, das exzentrisch auf einer gemeinsamen Achse 92 mit dem Schneckenrad gelagert ist. Das Zahnrad 14 kämmt mit dem zweiten Zahnrad 16, das exzentrisch auf einer zweiten Achse 94 gelagert ist. Als Abtriebselement 32 ist hier drehfest ein Abtriebsritzel 96 mit dem Zahnrad 16 verbunden, die beide auf der zweiten Achse 94 angeordnet sind. Das Abtriebselement 32, dessen Übersetzungsverhältnis entsprechend der Exzentrizität 24 der beiden Zahnräder 14, 16 über eine Umdrehung variiert, ist mit einer nicht näher dargestellten Verstellkomponente 50 wirkverbunden, deren Verstellmoment mit dem zur Verfügung gestellten Moment des Abtriebselements 32 korreliert ist.

In einer Variation dieses Ausführungsbeispiels gemäß Figur 4 weist das Getriebe 20 eine weitere Getriebestufe zur Verstärkung der Übersetzungsänderung auf. Hierzu ist ein zusätzliches Getrieberad 98 beispielsweise auf der ersten Achse 92 unabhängig vom Zahnrad 14 und Antriebsritzel 28 drehbar gelagert und kämmt mit dem Abtriebsritzel 96. Die Kombination des Abtriebsritzel 96 mit dem zusätzliche Getrieberad 98 führt zu einer weiteren Verstärkung des veränderlichen Momentes. Zur Übertragung des Moments auf die Verstellkomponente ist am Getrieberad 98 ein weiteres Abtriebselement 32 angeordnet. Bei diesem Ausführungsbeispiel wird das Moment der Ankerwelle 86 anstelle der Schnecke 88 mit einem Stirnrad 89 auf das Antriebsritzel 28 des Getriebes 20 mit veränderlicher Übersetzung übertragen. Für eine kompakte Bauweise der Betätigungsvorrichtung 10 ist das Getriebe 20 zumindest weitgehend in das Gehäuse 80, 82, 84 des Verstellantriebs 30 integriert.

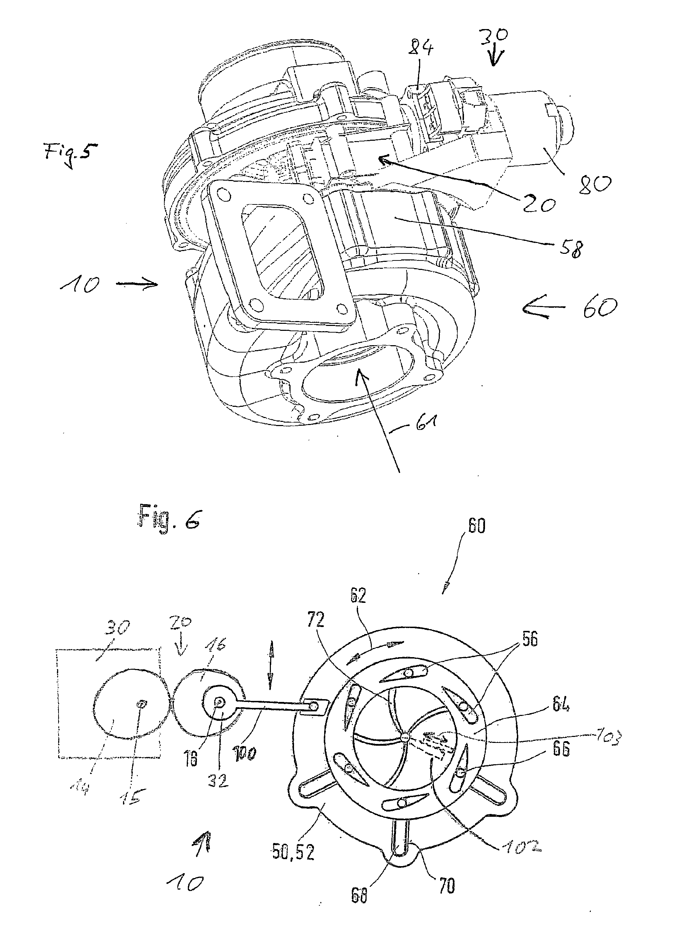

In Figur 5 ist ein Abgas-Turbolader 60 mit variabler Turbinengeometrie dargestellt, bei dem das Abgas axial auf eine in Figur 6 dargestellten Turbine 72 strömt und radial nach außen abgelenkt wird. Um die Verdichtung an den Abgasstrom 61 anpassen zu können, ist an einem Turbinengehäuse 58 ein Verstellmotor 30 mit einem nicht näher dargestellten Getriebe 20 mit veränderlichem Übersetzungsverhältnis angeflanscht, das die Verstellkomponenten 50 der Turbinengeometrie mit einer vom Verstellweg abhängigen Verstellkraft betätigt. Dabei wird beispielsweise der Staudruck des Abgases in der Turbine 72 bei hohen Drehzahlen des Verbrennungsmotors durch Veränderung der Turbinengeometrie unter hohen Verstellkräften reduziert, damit der Turbolader 60 bei einer plötzlichen Drehzahlerhöhung nicht beschädigt wird.

Figur 6 zeigt einen schematischen Schnitt eines Turboladers 60, bei dem die als Leitschaufelring 52 ausgebildete Verstellkomponente 50 über ein Getriebe 20 mit veränderlichem Übersetzungsverhältnis gemäß der Pfeilrichtung 62 verdreht wird. Die Leitschaufeln 56 sind mittels Bolzen 66 drehbar in einem Lagerring 64 gelagert. Die Bolzen 66 weisen drehfest mit diesen verbundenen radiale Hebel 68 auf, die in Aussparungen 70 des Leitschaufelrings 52 greifen, so dass eine Drehung des Leitschaufelrings 52 eine Drehung der einzelnen Leitschaufeln 56 bewirkt. Radial innerhalb der Leitschaufeln 56 befindet sich ein festes Turbinenrad 72, das Luft beispielsweise axial ansaugt und radial gegen eine nicht näher dargestellte, radial außerhalb der Leitschaufeln 56 liegende Gehäusewand ausstößt. In diesem Ausführungsbeispiel weist das Getriebe 20 zwei exzentrisch geformte Räder 14, 16 auf, die miteinander wirkverbunden sind. Sie können sowohl als Zahnräder, aber beispielsweise auch als Reibräder 14, 16 ausgebildet sein. Das Exzenterrad 14 wird vom Stellmotor 30 angetrieben und überträgt das Drehmoment mit veränderlichem Übersetzungsverhältnis an das Exzenterrad 16, das wiederum drehfest mit einem Abtriebselement 32 verbunden ist. In diesem Fall wird der Abtriebswinkel 40 direkt mittels der Kraftübertragungskomponente 100 auf den Leitschaufelring 52 übertragen. In einer Variation des Ausführungsbeispiels ist die Kraftübertragungskomponente 100 als mechanisches System ausgeführt, das die Drehbewegung des Abtriebselements 32 in eine lineare Stellbewegung, beispielsweise der beweglichen Turbinenschieber 102 einer variablen Schiebeturbine 72 überträgt. Anstelle der Leitschaufeln 56 kann der Turbolader 60 auch mit einem Bypass-Ventil ausgestattet sein, dessen Wastegaste-Klappe entsprechend der beweglichen Turbinenschieber 102 mittels Kraftübertragungskomponenten 100 betätigt wird.

In einer weiteren Variation des Ausführungsbeispiels können Federelemente zwischen einzelnen Komponenten 14, 16, 28, 32, 100 des Getriebes 20 oder zwischen den Getriebekomponenten 14, 16, 28, 32, 100 und einem Gehäuseteil 84 angeordnet werden. Die Federelemente können so angeordnet werden, dass in Abhängigkeit des Antriebswinkels 38 und des Abtriebswinkels 40 potenzielle Energie gespeichert und abgegeben wird. Dadurch wird der Effekt der Änderung des Übersetzungsverhältnisses vergrößert. Durch die elastischen Elemente 104 kann auch ein automatische Anfahren einer Notbetriebsposition beispielsweise im Falle eines Ausfalls des Stellmotors 30 realisiert werden.

Die Erfindung betrifft auf die Verstellung von beweglichen Komponenten eines Abgas-Turboladers. Dabei können unterschiedliche Motortypen sowie Getriebebauteile eingesetzt werden. Weisen die exzentrisch gelagerten Räder 14 und 16 eine Verzahnung auf, so kann die Form der Verzahnung der speziellen Anwendung, beispielsweise dem Maß der Exzentrizitäten 24, dem Abstand der beiden Drehpunkte 15, 18 oder den auftretenden Momenten angepasst werden.

## Patentansprüche

1. Turbolader (60) mit einer variablen Turbinengeometrie, die mittels mindestens einer Verstellkomponente (50) verstellbar ist, um die Verdichtung an den Abgasstrom im Kraftfahrzeug anzupassen, wobei die mindestens eine Verstellkomponente (50) mittels eines Stellmotors (30) zwischen zwei Endpositionen verstellbar ist, und zwischen dem Stellmotor (30) und der mindestens einen Verstellkomponente (50) ein ein Antriebselement (28) und ein Abtriebselement (32) aufweisendes Getriebe (20) angeordnet ist, dessen Drehmoment-Übersetzungsverhältnis sich mit einem Drehwinkel (40) des Abtriebselements (32) ändert, **dadurch gekennzeichnet, dass** das Getriebe (20) zwei exzentrisch gelagerte Zahnräder (14,16), die miteinander können, oder zwei exzentrische Räder (14, 16) oder zwei Ellipsenräder (14, 16) aufweist, die jeweils miteinander zusammenwirken, und das Getriebe (20) in ein Gehäuse des Stellmotors (30) integriert ist, und der Stellmotor (30) mit dem Getriebe (20) an einem Turbinengehäuse (58) des Turboladers (60) angeflanscht ist, wobei an mindestens einem der beiden Räder (14, 16), ein Federelement angeordnet ist, wobei mit den Rädern (14, 16) wirkverbunden federelastische Elemente befestigt sind, wodurch erreicht wird, dass die Verstellkomponente (50) bei Stromausfall des Stellmotors (30) selbsttätig eine bestimmte Vorzugsstellung einnehmen.

2. Turbolader (60) nach Anspruch 1, **dadurch gekennzeichnet dass** die mindestens eine Verstellkomponente (50) als drehbar angeordneter Leitschaufelring (52) zur Verstellung von beweglichen Leitschaufeln (56) zwischen zwei Endpositionen ausgebildet ist.

3. Turbolader (60) nach Anspruch 2, **dadurch gekennzeichnet, dass** die Leitschaufeln (56) mittels Bolzen (66) drehbar in einem Lagerring (64) gelagert sind, und drehfest mit den Bolzen (66) verbundene Radial-Hebel (68) aufweisen, die in Aussparungen (70) des Leitschaufelrings (52) greifen, so dass eine Drehung des Leitschaufelrings (52) eine Drehung der einzelnen Leitschaufeln (56) bewirkt.

4. Turbolader (60) nach einem der vorhergehenden Ansprüche, **dadurch gekennzeichnet, dass** das eine exzentrische Rad (16) drehfest mit dem Abtriebselement (32) verbunden ist, und der Drehwinkel (40) des Abtriebselements (32) direkt mittels einer Übertragungskomponente (100) auf die Verstellkomponente (50) übertragen wird.

5. Turbolader (60) nach einem der Ansprüche 1 oder 4, **dadurch gekennzeichnet, dass** die mindestens eine Verstellkomponente (50) als Turbinenschaufeln einer Turbine (72) ausgebildet sind, die insbesondere als variable Schiebeturbine (72) ausgebildet ist.

6. Turbolader (60) nach einem der vorhergehenden Ansprüche, **dadurch gekennzeichnet, dass** das die beiden Räder (14, 16) näherungsweise dieselbe Exzentrizität (24) aufweisen.

7. Turbolader (60) nach einem der vorhergehenden Ansprüche, **dadurch gekennzeichnet, dass** das Antriebselement (28) als drehfest mit dem ersten Rad (14) verbundenes Antriebsritzel (28) ausgebildet ist, das mit einer Abtriebswelle (86) des Stellmotors (30) wirkverbunden ist, und das Abtriebselement (32) drehfest mit dem zweiten Rad (16) verbunden ist.

8. Turbolader (60) nach einem der vorhergehenden Ansprüche, **dadurch gekennzeichnet, dass** das Getriebe (20) zusätzlich zu dem Räderpaar (14, 16) mindestens eine weitere Getriebestufe mit Getriebeelementen (98) aufweist, die insbesondere auf mindestens einer Achse (92, 94) gelagert sind, auf der auch eines der Räder (14, 16) angeordnet ist.

9. Turbolader (60) nach einem der vorhergehenden Ansprüche, **dadurch gekennzeichnet, dass** die Verstellkomponente (50) um einen Verstellwinkel (62) drehbar gelagert ist, und der Verstellwinkel (62) der Verstellkomponente (50) mit dem Drehwinkel (40) des Abtriebselements (32) korreliert ist.

## Claims

1. Turbocharger (60) having a variable turbine geometry that can be adjusted by means of at least one adjustment component (50) in order to adapt the compression to the exhaust-gas flow in the motor vehicle, wherein the at least one adjustment component (50) can be adjusted between two end positions by means of an actuating motor (30), and a gear mechanism (20) which has a drive input element (28) and a drive output element (32) is arranged between the actuating motor (30) and the at least one adjustment component (50), the torque transmission ratio of which gear mechanism (20) varies with an angle of rotation (40) of the drive output element (32), **characterized in that** the gear mechanism (20) has two eccentrically mounted gearwheels (14, 16) which mesh with one another or has two eccentric gears (14, 16) or two elliptical gears (14, 16) which interact with one another in each case, and the gear mechanism (20) is integrated into a housing of the actuating motor (30), and the actuating motor (30) with the gear mechanism (20) is flange-mounted on a turbine housing (58) of the turbocharger (60), wherein a spring element is arranged on at least one of the two gears (14, 16), wherein operatively connected resiliently elastic elements are fastened to the gears (14, 16), whereby it is achieved that the adjustment component (50) automatically assumes a defined preferred position in the event of electrical failure of the actuating motor (30).

2. Turbocharger (60) according to Claim 1, **characterized in that** the at least one adjustment component (50) is in the form of a rotatably arranged guide vane ring (52) for adjustment of movable guide vanes (56) between two end positions.

3. Turbocharger (60) according to Claim 2, **characterized in that** the guide vanes (56) are rotatably mounted in a bearing ring (64) by way of journals (66) and have radial levers (68) which are connected rotationally conjointly to the journals (66) and which engage into cutouts (70) of the guide vane ring (52) such that a rotation of the guide vane ring (52) effects a rotation of the individual guide vanes (56).

4. Turbocharger (60) according to one of the preceding claims, **characterized in that** one eccentric gear (16) is connected rotationally conjointly to the drive output element (32), and the angle of rotation (40) of the drive output element (32) is transmitted directly to the adjustment component (50) by means of a transfer component (100).

5. Turbocharger (60) according to either of Claims 1 and 4, **characterized in that** the at least one adjustment component (50) is in the form of turbine vanes of a turbine (72), which is in particular in the form of a variable slider-type turbine (72).

6. Turbocharger (60) according to one of the preceding claims, **characterized in that** the two gears (14, 16) have approximately the same eccentricity (24).

7. Turbocharger (60) according to one of the preceding claims, **characterized in that** the drive input element (28) is in the form of a drive input opinion (28) which is connected rotationally conjointly to the first gear (14) and which is operatively connected to a drive output shaft (86) of the actuating motor (30), and the drive output element (32) is connected rotationally conjointly to the second gear (16).

8. Turbocharger (60) according to one of the preceding claims, **characterized in that** the gear mechanism (20) has, in addition to the gear pair (14, 16), at least one further gear mechanism stage with gear mechanism elements (98) which are in particular mounted on at least one shaft (92, 94) on which one of the gears (14, 16) is also arranged.

9. Turbocharger (60) according to one of the preceding claims, **characterized in that** the adjustment component (50) is mounted so as to be rotatable through an adjustment angle (62), and the adjustment angle (62) of the adjustment component (50) is correlated with the angle of rotation (40) of the drive output element (32).

## Revendications

1. Turbocompresseur (60) comprenant une géométrie de turbine variable qui peut être réglée au moyen d'au moins un composant de réglage (50), afin d'adapter la compression au flux de gaz d'échappement dans le véhicule automobile, l'au moins un composant de réglage (50) pouvant être réglé au moyen d'un moteur de réglage (30) entre deux positions d'extrémité, et une transmission (20) présentant un élément d'entraînement (28) et un élément de sortie (32) étant disposée entre le moteur de réglage (30) et l'au moins un composant de réglage (50), le rapport de démultiplication de couple de la transmission variant avec un angle de rotation (40) de l'élément de sortie (32), **caractérisé en ce que** la transmission (20) présente deux roues dentées (14, 16) montées de manière excentrique, qui s'engrènent l'une dans l'autre, deux roues excentriques (14, 16) ou deux roues elliptiques (14, 16) qui coopèrent à chaque fois l'une avec l'autre, et la transmission (20) est intégrée dans un boîtier du moteur de réglage (30), et le moteur de réglage (30) est raccordé par bridage à la transmission (20) au niveau d'un carter de turbine (58) du turbocompresseur (60), un élément de ressort étant disposé au niveau d'au moins l'une des deux roues (14, 16), des éléments élastiques à ressort en liaison fonctionnelle avec les roues (14, 16) étant fixés de sorte que le composant de réglage (50), en cas de panne d'alimentation électrique du moteur de réglage (30), adopte automatiquement une position préférentielle déterminée.

2. Turbocompresseur (60) selon la revendication 1, **caractérisé en ce que** l'au moins un composant de réglage (50) est réalisé en tant que couronne d'aubes directrices (52) disposée de manière rotative pour le réglage d'aubes directrices mobiles (56) entre deux positions d'extrémité.

3. Turbocompresseur (60) selon la revendication 2, **caractérisé en ce que** les aubes directrices (56) sont supportées à rotation au moyen de boulons (66) dans une bague de palier (64), et présentent des leviers radiaux (68) connectés de manière solidaire en rotation aux boulons (66), lesquels leviers viennent en prise dans des évidements (70) de la couronne d'aubes directrices (52), de telle sorte qu'une rotation de la couronne d'aubes directrices (52) provoque une rotation des aubes directrices individuelles (56).

4. Turbocompresseur (60) selon l'une quelconque des revendications précédentes, **caractérisé en ce que** l'une des roues excentriques (16) est connectée de manière solidaire en rotation à l'élément de sortie (32), et l'angle de rotation (40) de l'élément de sortie (32) est transmis directement au moyen d'un composant de transfert (100) au composant de réglage (50).

5. Turbocompresseur (60) selon l'une quelconque des revendications 1 ou 4, **caractérisé en ce que** l'au moins un composant de réglage (50) est réalisé sous forme d'aubes de turbine d'une turbine (72), qui est réalisée notamment sous forme de turbine à tiroir variable (72).

6. Turbocompresseur (60) selon l'une quelconque des revendications précédentes, **caractérisé en ce que** les deux roues (14, 16) présentent approximativement la même excentricité (24).

7. Turbocompresseur (60) selon l'une quelconque des revendications précédentes, **caractérisé en ce que** l'élément d'entraînement (28) est réalisé sous forme de pignon d'entraînement (28) connecté de manière solidaire en rotation à la première roue (14), lequel pignon d'entraînement est en liaison fonctionnelle avec un arbre de sortie (86) du moteur de réglage (30) et l'élément de sortie (32) est connecté de manière solidaire en rotation à la deuxième roue (16).

8. Turbocompresseur (60) selon l'une quelconque des revendications précédentes, **caractérisé en ce que** la transmission (20), en plus de la paire de roues (14, 16), présente au moins un autre étage de transmission avec des éléments de transmission (98) qui sont supportés notamment sur au moins un axe (92, 94) sur lequel est disposée également l'une des roues (14, 16).

9. Turbocompresseur (60) selon l'une quelconque des revendications précédentes, **caractérisé en ce que** le composant de réglage (50) est monté de manière à pouvoir tourner suivant un angle de réglage (62), et l'angle de réglage (62) du composant de réglage (50) est corrélé à l'angle de rotation (40) de l'élément de sortie (32).
